(19) Europäisches Patentamt

European Patent Office

Office européen des brevets

(11) Veröffentlichungsnummer: **0 480 099 A1**

# (12) EUROPÄISCHE PATENTANMELDUNG

(21) Anmeldenummer: **90125339.3**

(51) Int. Cl.5: **B65G 25/06**

(22) Anmeldetag: **22.12.90**

(30) Priorität: **10.10.90 DE 9014057 U**

(43) Veröffentlichungstag der Anmeldung:
**15.04.92 Patentblatt 92/16**

(84) Benannte Vertragsstaaten:
**AT DE FR IT**

(71) Anmelder: **TIANI GMBH**
**Gartenstrasse 20**
**Rutesheim/Württ(DE)**

(72) Erfinder: **Tiani, Franz**
**Schubertstrasse 5**
**W-7255 Rutesheim(DE)**

(74) Vertreter: **Wolff, Michael, Dipl.-Phys.**
**Kirchheimer Strasse 69**
**W-7000 Stuttgart 75(DE)**

(54) **Transportvorrichtung für längliche Werkstücke.**

(57) **Gegenstand** der Erfindung ist eine Transportvorrichtung für längliche Werkstücke, z.B. Pleuel (5) mit exzentrischem Schwerpunkt.

**Stand der Technik** ist eine Vorrichtung mit zwei parallelen waagrechten, übereinander angeordneten Leisten (10, 12), von denen die obere, stationäre Tragleiste (10) die schwereren Werkstück-Köpfe (7) trägt und die untere, heb- und senkbare Hubleiste die leichteren Werkstück-Füße unterstützt, wobei diese in Transportrichtung der beiden Leisten hinter den Köpfen zurückbleiben. Durch abwechselndes Vorkippen der Köpfe und Nachkippen der Füße werden die Werkstücke schrittweise transportiert.

**Nachteil** der ununterbrochen bewegten Hubleiste ist der beim Stau der Werkstücke vor einer Bearbeitungs- oder Sammelstelle erzeugte Lärm durch Stampfen und Klappern der Werkstücke.

**Aufgabe** der Erfindung ist daher eine möglichst weit gehende Dämpfung der Lärmentwicklung ohne Zusatzeinrichtung.

**Lösung** dieser Aufgabe ist die ausschließlich waagrechte Hin- und Her-Bewegung der unteren Transportleiste (12) zum intermittierenden Vorschub der Werkstücke (5) dank des Reibungswechsels.

**Vorteil** dieser Lösung ist insbesondere die Ruhe der im Stau still stehenden Werkstücke (5), unter deren Füßen (9) die Transportleiste (12) wirkungslos hin und her zieht.

Fig.1

Rank Xerox (UK) Business Services

Die Erfindung betrifft eine Transportvorrichtung für längliche Werkstücke mit einem schwereren Kopf und einem leichteren Fuß, insbesondere Pleuel mit großem bzw. kleinem Auge für Automobil-Motoren; mit einer stationären geraden, obenliegenden, waagrechten Tragleiste zur Unterstützung der schwereren Werkstück-Köpfe und mit einer bewegbaren geraden, untenliegenden, im wesentlichen waagrechten Transportleiste zur Mitnahme der Werkstück-Füße, die in Transportrichtung stets hinter den Werkstück-Köpfen zurückbleiben.

Bei einer bekannten Transportvorrichtung dieser Art ist als Transportleiste zur Mitnahme der Werkstück-Füße eine Hubleiste zum mehr oder weniger vertikalen Anheben und Absenken dieser Füße vorhanden, wobei der Antrieb der Hubleiste mittels Getriebemotor und Hubexzenter von unten her durch Durchbrüche einer Tropfwanne unter der Hubleiste erfolgt. - Zum Transport der Werkstücke wird die Hubleiste angehoben, wobei die Werkstück-Köpfe von der oberen führungsleiste abheben und die Werkstücke dank ihrer Schräglage von ca. 15° gegen die Vertikale mit ihren Köpfen in Transportrichtung vorfallen, bis sie erneut auf der Führungsleiste, nun weiter vorn, liegen. Beim anschließenden Absenken der Hubleiste schwenken die freiwerdenden Werkstück-Füße in Transportrichtung nach, bis sie erneut auf der abgesenkten Hubleiste aufliegen, womit die Ausgangs-Schräglage wieder erreicht ist.

Nachteilig ist an der bekannten Transportvorrichtung der eingangs genannten Art, daß im Falle einer Staubildung vor einer Werkstück-Bearbeitungs- oder -Sammelstelle die Werkstücke stampfen infolge des Lastwechsels am Hubexzenter und klappern infolge des fortgesetzten Hebens und Senkens der Werkstücke, die dicht beieinander stehen, wobei eine Antriebsentlastung fehlt.

Der Erfindung liegt daher die Aufgabe zugrunde, die bekannte Transportvorrichtung ohne das Erfordernis einer Antriebsabschaltung dahingehend zu verbessern, daß die vom Antrieb bzw. von der für die gestauten Werkstücke sinnlosen Hubbewegung verursachte Lärmentwicklung zumindest erheblich gedämpft wird.

Diese Aufgabe ist bei einer Transportvorrichtung der eingangs genannten Art erfindungsgemäß dadurch gelöst, daß die Transportleiste ausschließlich waagrecht beweglich angeordnet und für eine hin- und hergehende translatorische Bewegung in waagrechter Richtung antreibbar ist, sodaß die Werkstücke intermittierend vorschiebbar sind.

Ein Vorteil einer solchen Vorrichtung ist der geräuscharme Transport der Werkstücke und deren Ruhen in Schräglage beim Stau. - Zum Transport der Werkstücke wird die Transportleiste im Wechsel vorgeschoben und zurückgezogen, wobei die Werkstück-Füße dank der zunehmenden Haftreibung an der Transportleiste die Werkstück-Köpfe auf der Tragleiste liegend nach vorn ziehen, sodaß die parallelen Schräglagen der Werkstücke nicht geändert werden, bzw. dank der abnehmenden Gleitreibung an der bewegten Transportleiste auf dieser ortsfest liegenbleiben, d.h. relativ zur Transportleiste auf dieser vorrücken.

Ein besonderer Vorteil der erfindungsgemäßen Transportvorrichtung ist der Wegfall der Tropfwannen-Durchbrüche. Der Antrieb der Transportleiste kann an einem ihrer Enden angeordnet werden.

Weist die Transportleiste in Transportrichtung eine Steigung von weniger als 10%, vorzugsweise 5%, auf, dann wird die Wirkungsweise der erfindungsgemäßen Transportvorrichtung vorteilhaft verstärkt.

Vorteilhaft ist auch eine Einrichtung zum Einstellen der Höhenlage der Transportleiste auf verschieden lange Werkstücke, insbesondere Pleuel mit unterschiedlichem Augenabstand. Die Einstellung kann dabei mittels eines einzigen Betätigungselementes erfolgen.

Im folgenden ist die Erfindung anhand einer durch die Zeichnung beispielhaft dargestellten Ausführungsform der erfindungsgemäßen Transportvorrichtung im einzelnen erläutert. Es zeigt schematisch:

Fig. 1     eine Seitenansicht

Fig. 2     einen vertikalen Querschnitt

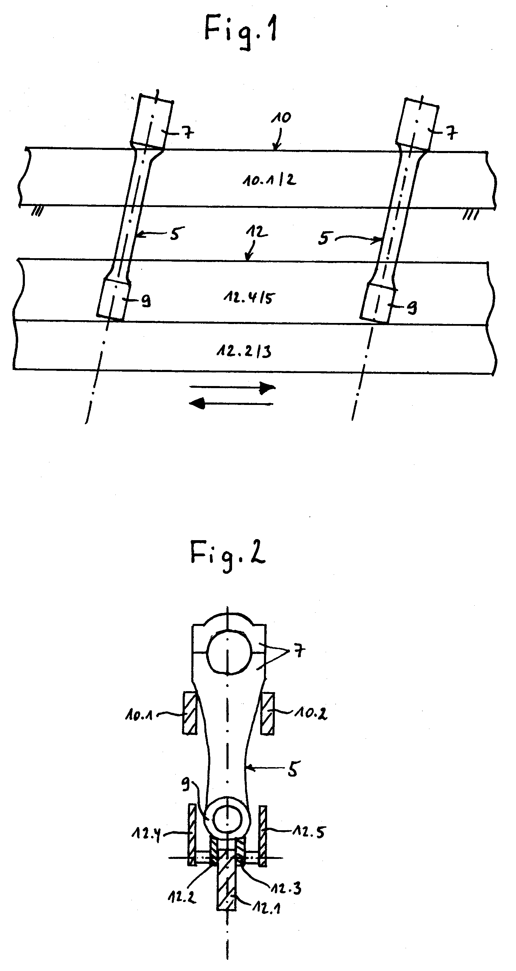

Im Ausführungsbeispiel sollen im Abstand aufeinanderfolgende Pleuel 5 für Automobil-Motoren mit Hubkolben und Kurbelwelle in Fig. 1 von links nach rechts transportiert werden, wobei die großen Augen 7 oben auf einer obenliegenden Tragleiste 10 und die kleinen Augen 9 unten auf einer untenliegenden Transportleiste 12 liegen, und zwar bei einer Schräglage jedes Pleuels 5 zwischen 10° und 25° gegen die Vertikale, z.B. 15° bis 20°.

Die Tragleiste 10 ist stationär, gerade und waagrecht; sie besteht aus zwei das große Auge 7 unterstützenden, parallelen, hochkant liegenden Leisten 10.1 und 2. Diese unterstützen die großen Augen 7, und zwar ständig, weil die Transportleiste 12 keine Steigung aufweist. Andernfalls würden die großen Augen 7 beim Vorschub der Transportleiste 12 von dieser ein wenig abheben.

Diese bewegbare, gerade und waagrechte Transportleiste 12 besteht hauptsächlich aus einer hochkant liegenden Mittelleiste 12.1, an der symmetrisch zwei parallele, hochkant liegende Innenleisten 12.2 und .3 zur Unterstützung der kleinen Augen 9 sowie zwei parallele, hochkant liegende Außenleisten 12.4 und .5 befestigt sind, welche die Innenleisten zur seitlichen Führung der kleinen Augen 9 über ragen.

Der nicht gezeigte Antrieb der waagrechten oszillierenden Transportleiste 12 kann mittels Kurbeltrieb, Linearzylinder oder Schwingelementen erfolgen.

**Patentansprüche**

1.  Transportvorrichtung für längliche Werkstücke (Pleuel 5) mit einem schwereren Kopf (großes Auge 7) und einem leichteren Fuß (kleines Auge 9), insbesondere Pleuel (5) mit großem (7) bzw. kleinem (9) Auge für Automobil-Motoren; mit einer stationären geraden, obenliegenden, waagrechten Tragleiste (10) zur Unterstützung der schwereren Werkstück-Köpfe (große Augen 7) und mit einer bewegbaren geraden, untenliegenden, im wesentlichen waagrechten Transportleiste (12) zur Mitnahme der Werkstück-Füße (kleine Augen 9), die in Transportrichtung stets hinter den Werkstück-Köpfen (große Augen 7) zurückbleiben, dadurch **gekennzeichnet,** daß die Transportleiste (12) ausschließlich waagrecht beweglich angeordnet und für eine hin- und hergehende translatorische Bewegung in waagrechter Richtung antreibbar ist, sodaß die Werkstücke (Pleuel 5) intermittierend vorschiebbar sind.

2.  Vorrichtung nach Anspruch 1, dadurch gekennzeichnet, daß die Transportleiste (12) in Transportrichtung eine Steigung von weniger als 10%, vorzugsweise 5%, aufweist.

3.  Vorrichtung nach Anspruch 1 oder 2, gekennzeichnet durch eine Einrichtung (-) zum Einstellen der Höhenlage der Transportleiste (12) auf verschieden lange Werkstücke, insbesondere Pleuel (5) mit unterschiedlichem Augenabstand (7 - 9).

# Fig.1

# Fig.2

Europäisches
Patentamt

**EUROPÄISCHER RECHERCHENBERICHT**

Nummer der Anmeldung

## EINSCHLÄGIGE DOKUMENTE

EP 90125339.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|-----------|-----------------------------------------------------------------------------------|-------------------|------------------------------------------|
| A | US - A - 4 299 323 (KOCH) * Zusammenfassung * -- | 1,2 | B 65 G 25/06 |
| A | US - A - 4 496 042 (RISE) * Fig. 7 * -- | 1 | |
| A | DE - A - 2 700 865 (LAMB) * Fig. 2 * ---- | 1 | |

| | RECHERCHIERTE SACHGEBIETE (Int. Cl.⁵) |
|---|---------------------------------------|
| | B 65 G |

Der vorliegende Recherchenbericht wurde für alle Patentansprüche erstellt.

| Recherchenort | Abschlußdatum der Recherche | Prüfer |
|---------------|------------------------------|--------|
| WIEN | 20-11-1991 | BAUMGARTNER |